# EUROPÄISCHE PATENTSCHRIFT

(11) **EP 1 466 441 B1**
(45) Veröffentlichungstag und Bekanntmachung des Hinweises auf die Patenterteilung: **31.08.2005**
(21) Anmeldenummer: 02795017.9
(22) Anmeldetag: 18.12.2002
(51) Int. Cl.: H04L 12/26, H04L 12/56

(54) **ANORDNUNG ZUR ZUSTANDSÜBERWACHUNG VON KOMPONENTEN IN EINEM P AKETVERMITTELTEN KOMMUNIKATIONSNETZ**
CONFIGURATION FOR MONITORING THE STATE OF COMPONENTS IN A PACKET-SWITCHED COMMUNICATIONS NETWORK
DISPOSITIF POUR SURVEILLER L'ETAT D'ELEMENTS DANS UN RESEAU DE COMMUNICATION PAR PAQUETS

(30) Priorität: 17.01.2002 DE 10201649
(43) Veröffentlichungstag der Anmeldung: 13.10.2004
(73) Patentinhaber: SIEMENS AKTIENGESELLSCHAFT, 80333 München (DE)
(72) Erfinder: NEUHAUS, Ralf, 44534 Lünen (DE); UECKER, Rainer, 45470 Mülheim an der Ruhr (DE)
(86) Internationale Anmeldenummer: PCT/DE2002/004639
(87) Internationale Veröffentlichungsnummer: WO 2003/061200

(56) Entgegenhaltungen:
- WO-A-01/35617
- WO-A-99/17523

## Beschreibung

Die Erfindung betrifft eine Anordnung zur Überwachung von Komponenten in einem Kommunikationsnetz.

Es ist bekannt, in modernen Kommunikationsnetzen z.B. den Vermittlungszustand anderer Teilnehmer derselben Kommunikationsanlage zu beobachten. So wird an den Vermittlungsplätzen der Kommunikationsanlagen mittels Belegt-Lampenfeldern oder mit Hilfe von PC-Anwendungen für jeden Teilnehmer angezeigt, ob er gerade frei oder besetzt ist oder sich im Rufzustand befindet.

Weiter sind Endgeräte an Kommunikationsanlagen häufig mit Direktruftasten ausgerüstet, mit denen ein anderer Teilnehmer derselben Kommunikationsanlage per Tastendruck gerufen werden kann. Diesen Direktruftasten ist meist eine LED oder ein anderes Anzeigeelement zugeordnet, womit der Vermittlungszustand des zugehörigen Teilnehmers beispielsweise durch Leuchten oder Blinken der LED angezeigt wird.

Wenn an einer Kommunikationsanlage mehrere PC-Anwendungen betrieben werden sollen, müssen die Informationen über den vermittlungstechnischen Zustand der visualisierten internen Teilnehmer in einem Server zwischengespeichert und von dort an die PCs zur Zustandsanzeige weitergeleitet werden. Dazu hinterlegt jede überwachende PC-Anwendung in dem Server die Rufnummern als Adressen der von ihr zu überwachenden Endgeräte. Der Server veranlasst dann über eine Datenverbindung den Start eines Überwachungsprozesses in der Kommunikationsanlage. Dieser Überwachungsauftrag wird häufig auch als "Setzen eines Monitor-Punkts" (engl.: monitoring = Überwachung) bezeichnet. Bei einer Zustandsänderung der überwachten Komponente sendet die Kommunikationsanlage eine entsprechende Meldung an den Server, der sie an die PC-Anwendungen weiterleitet. Ein Server kann auch Zustandsinformationen über die internen Teilnehmer mehrerer Kommunikationsanlagen in einem Kommunikationsnetz nach Art eines Netzverbunds sammeln und weiterleiten, indem je eine Datenverbindung zu jeder Kommunikationsanlage aufgebaut wird.

WO 99 / 17 523 A offenbart eine Überwachungsanordnung, wobei Agent Stations eines Call Centers über einen Computer/Telephony Integration CTI Server von einer Supervisor/Control Station überwacht werden.

Bei den verschiedenen Anordnungen hat sich als nachteilig erwiesen, dass die Dienste zur Überwachung von Teilnehmerzuständen in einem Kommunikationsnetz jeweils auf die Teilnehmer an einer einzelnen Kommunikationsanlage oder auf die Teilnehmer von wenigen in einem Netzverbund zusammengefassten Kommunikationsanlagen beschränkt sind. Teilnehmer, die nicht an derselben Kommunikationsanlage oder an demselben Netzverbund angeschlossen sind, sowie der Dienst, können nicht überwacht werden. Darüber hinaus ist zur Anschaltung mehrerer Geräte zur Visualisierung von Teilnehmerzuständen sowie zur Überwachung von Teilnehmern an mehreren Kommunikationsanlagen eine zentrale Instanz im Kommunikationsnetz, also ein Server, notwendig.

Aufgabe der Erfindung ist es, die Zustände von Teilnehmern oder allgemein von adressierbaren Komponenten in einem Kommunikationsnetz unabhängig von ihrer Lokalisation überwachbar zu machen.

Die Lösung dieser Aufgabe ist bezogen auf die Vorrichtung durch die im Anspruch 1 und bezogen auf das Verfahren durch die im Anspruch 9 angegebenen Merkmale gegeben. Durch die kennzeichnen Merkmale der Unteransprüche ist die Vorrichtung in vorteilhafter Weise weiter ausgestaltet.

Die Lösung sieht bezogen auf die Vorrichtung vor, dass jede überwachbare und überwachende Komponente Kommunikationsmittel zum direkten Datenaustausch aufweist, dass die überwachende

Komponente den Überwachungsauftrag direkt zu der zu überwachenden Komponente übermittelt, und dass jede überwachbare Komponente Speichermittel für die in den Überwachungsaufträgen enthaltenen Adressen und Überwachungsmittel zur Zustandsüberwachung aufweist, die einen zu überwachenden Zustand zumindest bei einer Zustandsänderung unter Verwendung der Kommunikationsmittel direkt zur überwachenden Komponente überträgt. Der Vorteil dieser Lösung besteht darin, dass die Überwachung direkt zwischen Komponenten ohne einen zwischengeschalteten Dienst erfolgt und dass in aus Teil-Netzen aufgebauten Netzwerken eine in einem Teil-Netz angeordnete überwachende Komponente andere Komponenten auch in anderen Teil-Netzen überwachen kann, also unabhängig von ihrer Lokalisation.

Direkte Verbindungen zwischen Komponenten lassen sich besonders einfach aufbauen, wenn das Kommunikationsnetz ein paketvermitteltes Netzwerk (IP-Netz) ist.

Wenn die Anzahl der in einem Speichermittel registrierbaren Adressen vorgebbar sind, kann die durch die Überwachungen verursachte Netzbelastung angepasst werden.

Der zur Übertragung von Zustandsänderungen erforderliche Datenaustausch wird minimiert, indem der Überwachungsauftrag Informationen darüber umfasst, welche Zustandsänderungen übertragen werden sollen.

Wenn die überwachende Komponente die Informationen über Zustände oder Zustandsänderungen für eine optische Anzeige und/oder zur Speicherung und/oder zur Weiterleitung an andere Komponenten verwendet, können die gewonnenen Informationen flexibel ausgewertet werden.

Erfordernisse des Datenschutzes können erfüllt werden, indem die überwachte Komponente die Überwachung durch einzelne oder alle überwachende Komponenten sperren kann.

Erfolglose Anrufversuche zwischen Teilnehmern in einem Kommunikationsnetz können vermieden werden, wenn die überwachende Komponente in Fällen, in denen ein Überwachungsauftrag nicht übermittelbar ist, eine dementsprechende Anzeige ausgibt und in festgelegten Zeitabständen einen erneuten Übermittlungsversuch vornimmt.

Wenn die Information über die Übermittelbarkeit des Überwachungsauftrages zur Feststellung eines Vermittlungszustandes der zu überwachenden Komponente nutzbar ist, kann eine Anzeige des Vermittlungszustandes auch für diejenigen überwachten Komponenten erfolgen, die keine Informationen über ihren Zustand oder über ihre Zustandsänderung zur überwachenden Komponente übertragen.

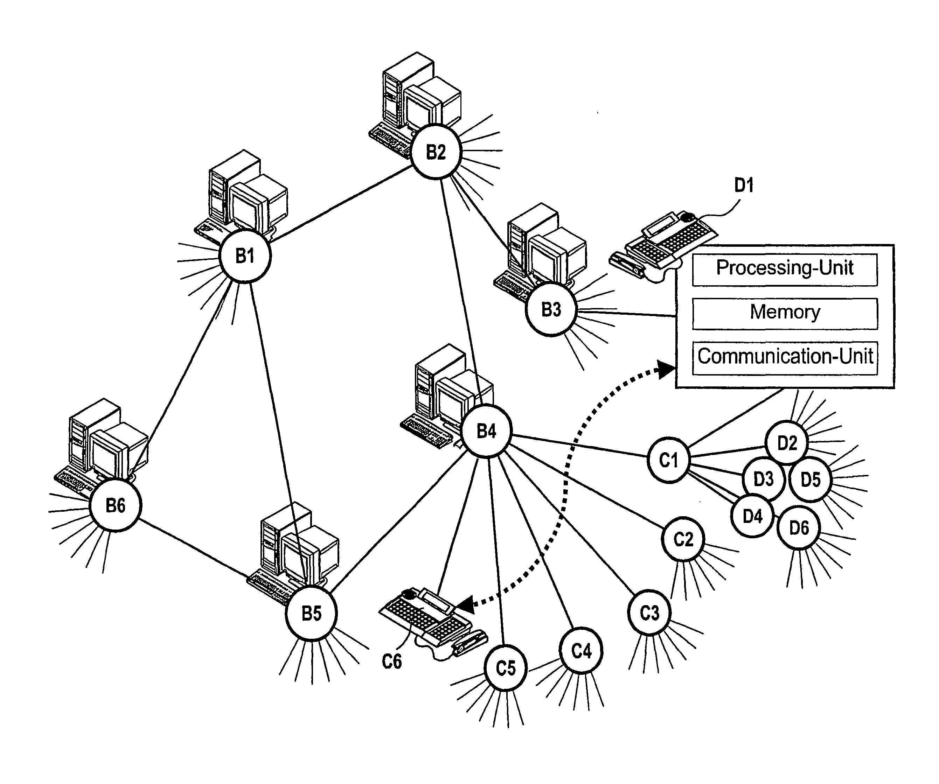

Ein Ausführungsbeispiel einer erfindungsgemäßen Anordnung zur Überwachung von Komponenten in einem Kommunikationsnetz wird nachfolgend anhand der Zeichnung beschrieben.

Die einzige Figur zeigt dabei ein VoIP-Kommunikationsnetz (VoIP = Voice over IP; Sprache über das Internet-Protokoll), welches aus mehreren Kommunikationsanlagen und daran jeweils angeschlossenen Teilnehmern besteht, die im allgemeinen Sinne Komponenten B1-B6, C1-C6, D1-D6 des Kommunikationsnetzes darstellen.

Alle Komponenten B1-B6, C1-C6, D1-D6 des Kommunikationsnetzes sind über ein paketvermitteltes Netzwerk (IP-Netz) miteinander verbunden. Das Netzwerk ist hier eine Mischform aus ringförmiger und sternförmiger Vermaschung. Prinzipiell kann auch jede andere Vernetzungsart angewendet werden, solange sichergestellt ist, dass die Komponenten B1-B6, C1-C6, D1-D6 entweder unmittelbar oder mittelbar, das heisst mit Zwischenschaltung anderer Komponenten, Daten miteinander austauschen können. In der Figur stellen die Linien zwischen den Komponenten B1-B6, C1-C6, D1-D6 Datenverbindungen dar. Die als Server ausgebildeten Komponenten B1-B6 stellen in dem Kommunikationsnetz eine Vermittlungsfunktion zur Verfügung. Diese bezeichnet man auch als Gatekeeper-Funktion. In einem Gatekeeper sind die Durchwahlrufnummern, die auch aus der leitungsvermittelten Telephonie bekannt sind, den Netzwerkadressen (IP-Adressen) zugeordnet. Der Gatekeeper, z. B. Komponente B1, wird also zum Aufbau einer Kommunikationsverbindung zwischen zwei Komponenten C6, D1 verwendet. Während einer Gesprächsverbindung zwischen den Komponenten C6, D1 werden die Datenpakete mit den Sprachdaten jedoch direkt zwischen den Komponenten C6, D1 übertragen, ohne dass - im Gegensatz zur leitungsvermittelten Telephonie - ein Vermittlungsknoten zwischengeschaltet ist. Erst beim Abbau einer Verbindung zwischen den Komponenten C6, D1 werden wieder Informationen an den Gatekeeper A übermittelt, nämlich solche die den Verbindungsabbau betreffen.

Im Kommunikationsnetz kann jede Komponente B1-B6, C1-C6, D1-D6 durch eine der anderen Komponenten B1-B6, C1-C6, D1-D6 überwacht werden, also die Komponente B1 die durch die Komponenten B2-B6, C1-C6, D1-D6, die Komponente B2 durch die Komponenten B1, B3-B6, C1-C6, D1-D6 und so weiter, und jede Komponente B1-B6, C1-C6, D1-D6 kann jede andere Komponente B1-B6, C1-C6, D1-D6 überwachen, also wiederum die Komponente B1 die Komponenten B2-B6, C1-C6, D1-D6, die Komponente B2 die Komponenten B1, B3-B6, C1-C6, D1-D6 und so weiter. Dabei kann es sich bei den Komponenten B1-B6, C1-C6, D1-D6 sowohl um Endgeräte (also Telefone, auf PCs installierte Telephonie-Clients, PCs, Video-Terminals o. ä.) als auch um Netzwerkkomponenten (also Kommunikationsserver, Gateways, Gatekeeper o. ä.) handeln.

Alle Komponenten B1-B6, C1-C6, D1-D6 sind zur Überwachung mit einem Kommunikationsmodul als Kommunikationsmittel (Communication-Unit) ausgestattet, welches eine direkte Kommunikation jeweils mit den anderen Komponenten B1-B6, C1-C6, D1-D6 gestattet, also ohne Zwischenschaltung einer weiteren Instanz. (In einem Kommunikationsnetz nach dem Internet-Protokoll (IP-Netz) sind grundsätzlich alle Komponenten B1-B6, C1-C6, D1-D6 mit einem solchen Kommunikationsmodul ausgerüstet.)

Weiter sind alle Komponenten B1-B6, C1-C6, D1-D6 überwachbar und deshalb mit einer Speichereinheit als Speichermittel (Memory) ausgestattet, in der die Adressen derjenigen Komponenten B1-B6, C1-C6, D1-D6 abgelegt sind, die mit Zustandsinformationen über den Vermittlungszustand versorgt werden müssen.

Alle Komponenten B1-B6, C1-C6, D1-D6 umfassen weiterhin eine Verarbeitungseinheit (Processing-Unit), die den eigenen Vermittlungszustand beobachten und Zustandsänderungen über das Kommunikationsmodul an die in der Speichereinheit hinterlegten Adressen versenden kann. Zur Überwachung baut die Verarbeitungseinheit der überwachenden Komponente über das Kommunikationsmodul jeweils eine Verbindung zu der zu überwachenden Komponente B1-B6, C1-C6, D1-D6 auf und hinterlegt in der dortigen Speichereinheit die eigene Adresse.

Selbstverständlich kann es sich bei der Verarbeitungseinheit der zu überwachenden Komponente B1-B6, C1-C6, D1-D6 und der überwachten Komponente B1-B6, C1-C6, D1-D6 jeweils um verschiedene Verarbeitungseinheiten oder auch verschiedene Arten von Verarbeitungseinheiten handeln, insbesondere wenn ein Teil der Komponenten nur überwachbar und ein Teil nur überwachend ist.

Im Folgenden wird beispielhaft der Ablauf eines Überwachungsvorgangs zwischen den Komponenten D1 und C6 beschrieben, bei dem der Vermittlungszustand ("frei", "besetzt" oder "im Rufzustand befindlich") einer überwachten Komponente D1 an einer überwachenden Komponente C6 angezeigt werden soll.

Ein Benutzer aktiviert dabei zunächst an einem IP-Telefon als der überwachenden Komponente C6 eine Funktion zur permanenten Anzeige des Rufzustands der Komponente D1, die ebenfalls eine IP-Telefon ist. Dazu gibt der Benutzer an der Komponente C6 den entsprechenden Befehl und die Rufnummer der Komponente D1 ein. Die Komponente C6 setzt die Durchwahlnummer der Komponente D1 geräte-intern zunächst in die Netzwerkadresse, also die IP-Adresse, der Komponente D1 um. In den Fällen, in denen diese Zuordnung nicht anhand einer bereits in der Komponente C6 vorhanden Tabelle erfolgen kann, wird die Netzwerkadresse der zu überwachenden Komponente durch eine Abfrage beim Gatekeeper A ermittelt. Die Komponente C6 sendet nun über das Netzwerk direkt zur Komponente D1 einen Überwachungsauftrag, der zum einen Angaben darüber enthält, welche Zustände und Zustandsänderungen überwacht werden sollen und zum anderen die Netzwerkadresse der Komponente C6, an die die Zustände bzw. Zustandsänderung übermittelt werden sollen. Hier soll der Rufzustand der Komponente D1 überwacht werden, also die Zustände "frei", "besetzt" und "im Ruf befindlich" ("Telefon läutet"). Die Komponente D1 empfängt diesen Überwachungsauftrag und speichert die Adresse der Komponente C6 zusammen mit den Informationen darüber, welche Zustände überwacht werden sollen in einem dafür vorgesehen Speicherbereich ab, sofern die Anzahl der dort bereits gespeicherten Adressen nicht bereits einen zuvor festgelegten Maximalwert erreicht hat. Die zu speichernde Adresse darf auch nicht in einer "Verbotsliste" eingetragen sein bzw. einer "Verbotsbedingung" genügen, wobei auch eine Entscheidung nach "Erlaubnislisten" bzw. "Erlaubnisbedingungen" getroffen werden kann. Nach erfolgter Speicherung wird mittels vorgesehener Überwachungsmittel, die z.B. in der Verarbeitungseinheit der Komponente D1 angeordnet sein können, ein Überwachungsprozess gestartet, der fortlaufend den Rufzustand der eigenen Komponente D1 überwacht. Danach übermittelt die Komponente D1 unter Verwendung der Kommunikationsmittel (Communication-Unit) zur Komponente C6 eine Quittierungsnachricht, mit der der Start der Überwachung bestätigt wird. Diese Quittierungsnachricht enthält bereits die Information über den aktuellen Rufzustand, die in der Komponente C6 als Startwert gespeichert wird. Im Display der Komponente C6 wird dann ein Anzeigefeld für die Komponente D1 eingerichtet, welches verschiedene Symbole für die drei Rufzustände aufweist bzw. darstellen kann und den aktuellen Rufzustand als Startwert darstellt.

Bei Ausbleiben der Quittierungsmeldung innerhalb einer vorgegebenen Zeitspanne oder bei negativer Quittierungsmeldung wird ein Zustand "nicht erreichbar" oder "nicht überwachbar" dargestellt. Bei ausbleibender Quittierungsmeldung kann in Zeitabständen ein neuer Überwachungsauftrag versendet werden, damit die Überwachung beginnt, sobald die Komponente D1 wieder verfügbar ist. Die Verfügbarkeit einer zu überwachenden Komponente D1 kann auch mit dem aus IP-Netzen bekannten PING-Verfahren festgestellt werden, bei dem als Testnachricht ein spezielles Datenpaket über das Netzwerk übertragen wird.

Sobald sich der Rufzustand der Komponente D1 ändert, beispielsweise immer dann, wenn der Benutzer der Komponente D1 ein Gespräch beginnt, wird dies durch den Überwachungsprozess in der Komponente D1 registriert und eine dementsprechende Meldung an alle diejenigen Adressen im zuvor beschriebenen Speicherbereich verschickt, denen die Überwachung des Rufzustandes zugeordnet ist. So wird hier aufgrund des laufenden Gesprächs eine Meldung, die den Rufstand "besetzt" umfasst, von der Komponente D1 zur Komponente C6 übermittelt. Im Display der Komponente C6 wird nun der Komponente D1 ein Symbol zugeordnet, welches den neuen Rufzustand "besetzt" visualisiert.

Die Komponente C6 benutzt diese Information auch dazu, dem an ihr arbeitenden Benutzer immer nur die derzeit möglichen Kommunikationswege anzubieten. Wenn der Benutzer der Komponente C6 einen Anruf zur Komponente D1 startet, kann sofort ein entsprechender Hinweis auf den Rufzustand "besetzt" erfolgen und als alternativer Kommunikationsweg selbsttätig ein Eingabefeld zur Eingabe einer textbasierten Kurznachricht (SMS) aktiviert werden, bei dem im Adressfeld die Durchwahlnummer der Komponente D1 vorbelegt ist.

## Patentansprüche

1. Anordnung mit in einem Kommunikationsnetz adressierbaren Komponenten (B1-B6, C1-C6, D1-D6), welche derart ausgestattet sind, dass jeweils eine Komponente (B1-B6, C1-C6, D1-D6) von mindestens einer anderen Komponente (B1-B6, C1-C6, D1-D6) überwachbar ist,
dass jeweils ein Überwachungsauftrag von einer überwachenden Komponente (C6) erteilt wird, der die Adresse dieser Komponente (C6) umfasst,
**dadurch gekennzeichnet,**
**dass** jede überwachbare und überwachende Komponente (D1, C6) Kommunikationsmittel zum direkten Datenaustausch aufweist,
**dass** die überwachende Komponente (C6) den Überwachungsauftrag direkt zu der zu überwachenden Komponente (D1) übermittelt, und
**dass** jede überwachbare Komponente (D1) Speichermittel für die in dem Überwachungsauftrag enthaltene Adresse und Überwachungsmittel zur Zustandsüberwachung aufweist, die einen zu überwachenden Zustand zumindest bei einer Zustandsänderung unter Verwendung der Kommunikationsmittel direkt zur überwachenden Komponente (C6) überträgt.

2. Anordnung nach Anspruch 1,
**dadurch gekennzeichnet,**
**dass** das Kommunikationsnetz ein paketvermitteltes Netzwerk IP-Netz ist.

3. Anordnung nach einem der vorhergehenden Ansprüche,
**dadurch gekennzeichnet,**
**dass** die Anzahl der in einem Speichermittel registrierbaren Adressen vorgebbar sind.

4. Anordnung nach einem der vorhergehenden Ansprüche,
**dadurch gekennzeichnet,**
**dass** der Überwachungsauftrag Informationen darüber umfasst, welche Zustandsänderungen übertragen werden sollen.

5. Anordnung nach einem der vorhergehenden Ansprüche,
**dadurch gekennzeichnet,**
**dass** die überwachende Komponente (C6) die Informationen über Zustände oder Zustandsänderungen für eine optische Anzeige und/oder zur Speicherung und/oder zur Weiterleitung an andere Komponenten (B1-B6, C1-C5, D1-D6) verwendet.

6. Anordnung nach einem der vorhergehenden Ansprüche,
**dadurch gekennzeichnet,**
**dass** die überwachte Komponente (D1) die Überwachung durch einzelne oder alle überwachenden Komponenten (B1-B6, C1-C6, D2-D6) sperren kann.

7. Anordnung nach einem der vorhergehenden Ansprüche,
**dadurch gekennzeichnet,**
**dass** die überwachende Komponente (C6) in Fällen, in denen ein Überwachungsauftrag nicht übermittelbar ist, eine dementsprechende Anzeige ausgibt und in festgelegten Zeitabständen einen erneuten Übermittlungsversuch vornimmt.

8. Anordnung nach Anspruch 7,
**dadurch gekennzeichnet,**
**dass** die Information über die Übermittelbarkeit des Überwachungsauftrages zur Feststellung eines entsprechenden Zustandes der zu überwachenden Komponente (D1) nutzbar ist.

9. Verfahren zur Erlangung von Informationen über einen Zustand oder eine Zustandsänderung einer zu überwachenden Komponente (B1-B6, C1-C6, D1-D6), die zu einer Anordnung mit in einem Kommunikationsnetz verbundenen adressierbaren Komponenten (B1-B6, C1-C6, D1-D6) gehört,
in dem jeweils eine Komponente (D1) von mindestens einer anderen Komponente (C6) überwacht werden kann,
wobei jeweils ein Überwachungsauftrag von einer überwachenden Komponente (C6) erteilt wird, der die Adresse dieser Komponente (C6) umfasst,
**dadurch gekennzeichnet,**
**dass** überwachte und überwachende Komponente (D1, C6) Daten direkt austauschen,
**dass** die überwachende Komponente (C6) den Überwachungsauftrag direkt zu der zu überwachenden Komponente (D1) übermittelt, dass jede überwachte Komponente (D1) die Adresse jeder überwachenden Komponente (C6) speichert, ihren eigenen Zustand selbst überwacht und zumindest bei einer Zustandsänderung zur überwachenden Komponente (C6) überträgt.

## Claims

1. Arrangement having components (B1-B6, C1-C6, D1-D6) which can be addressed in a communication network, which are arranged such
that a respective component (B1-B6, C1-C6, D1-D6) can be monitored by at least one other component (B1-B6, C1-C6, D1-D6),
that a respective monitoring instruction is given by a monitoring component (C6), said instruction comprising the address of this component (C6),
**characterized**
**in that** each monitorable and monitoring component (D1, C6) has communication means for direct data interchange,
**in that** the monitoring component (C6) transmits the monitoring instruction directly to the component (D1) which is to be monitored, and
**in that** each monitorable component (D1) has storage means for the address contained in the monitoring instruction and monitoring means for state monitoring which, at least in the event of a change of state, transfer a state to be monitored directly to the monitoring component (C6) using the communication means.

2. Arrangement according to Claim 1,
**characterized**
**in that** the communication network is a packet-switched network - IP network.

3. Arrangement according to one of the preceding claims,
**characterized**
**in that** the number of addresses which can be registered in a storage means is prescribable.

4. Arrangement according to one of the preceding claims,
**characterized**
**in that** the monitoring instruction comprises information about which changes of state are to be transferred.

5. Arrangement according to one of the preceding claims,
**characterized**
**in that** the monitoring component (C6) uses the information about states or changes of state for visual indication and/or for storage and/or for forwarding to other components (B1-B6, C1-C5, D1-D6).

6. Arrangement according to one of the preceding claims,
**characterized**
**in that** the monitored component (D1) can disable monitoring by individual or all monitoring components (B1-B6, C1-C6, D2-D6).

7. Arrangement according to one of the preceding claims,
**characterized**
**in that**, in cases in which a monitoring instruction cannot be transmitted, the monitoring component (C6) outputs a corresponding indicator and makes a fresh transmission attempt at stipulated intervals of time.

8. Arrangement according to Claim 7,
**characterized**
**in that** the information about the transmittability of the monitoring instruction can be used to determine a corresponding state for the component (D1) which is to be monitored.

9. Method for obtaining information about a state or a change of state in a component (B1-B6, C1-C6, D1-D6) which is to be monitored and which is part of an arrangement having addressable components (B1-B6, C1-C6, D1-D6) which are connected in the communication network, in which a respective component (D1) can be monitored by at least one other component (C6), where a respective monitoring instruction is given by a monitoring component (C6), said instruction comprising the address of this component (C6),
**characterized**
**in that** the monitored and monitoring components (D1, C6) interchange data directly,
**in that** the monitoring component (C6) transmits the monitoring instruction directly to the component (D1) which is to be monitored,
**in that** each monitored component (D1) stores the address of each monitoring component (C6), monitors its own state itself and transfers it to the monitoring component (C6) at least in the event of a change of state.

## Revendications

1. Dispositif avec des composants (B1 à B6, C1 à C6, D1 à D6) qui sont adressables dans un réseau de communication et qui sont conçus de telle sorte qu'un composant (B1 à B6, C1 à C6, D1 à D6) peut être surveillé par au moins un autre composant (B1 à B6, C1 à C6, D1 à D6) et qu'un composant surveillant (C6) peut émettre un ordre de surveillance qui comprend l'adresse de ce composant (C6),
**caractérisé par le fait que**
tout composant pouvant être surveillé ou surveillant (D1, C6) comporte un moyen de communication pour l'échange de données direct,
le composant surveillant (C6) transmet l'ordre de surveillance directement au composant à surveiller (D1), et
tout composant pouvant être surveillé (D1) comporte un moyen de mémorisation pour l'adresse contenue dans l'ordre de surveillance et un moyen de surveillance qui est destiné à la surveillance d'état et qui transmet un état à surveiller au moins lors d'un changement d'état directement au composant surveillant (C6) en utilisant le moyen de communication.

2. Dispositif selon la revendication 1,
**caractérisé par le fait que** le réseau de communication est un réseau à commutation de paquets - réseau IP.

3. Dispositif selon l'une des revendications précédentes,
**caractérisé par le fait que** le nombre des adresses enregistrables dans un moyen de mémorisation peut être

4. Dispositif selon l'une des revendications précédentes,
**caractérisé par le fait que** l'ordre de surveillance comprend des informations indiquant quels changements d'état doivent être transmis.

5. Dispositif selon l'une des revendications précédentes,
**caractérisé par le fait que** le composant surveillant (C6) utilise les informations concernant des états ou des changements d'états pour un affichage optique et/ou pour la mémorisation et/ou pour la retransmission à d'autres composants (B1 à B6, C1 à C5, D1 à D6).

6. Dispositif selon l'une des revendications précédentes,
**caractérisé par le fait que** le composant surveillé (D1) peut interdire la surveillance par certains composants ou par tous les composants (B1 à B6, C1 à C6, D2 à D6).

7. Dispositif selon l'une des revendications précédentes,
**caractérisé par le fait que**, si un ordre de surveillance n'est pas transmissible, le composant surveillant (C6) fournit une indication correspondante et effectue une nouvelle tentative de transmission à intervalles de temps fixés.

8. Dispositif selon la revendication 7,
**caractérisé par le fait que** l'information concernant la transmissibilité de l'ordre de surveillance est utilisable pour la détermination d'un état correspondant du composant à

9. Procédé pour obtenir des informations sur un état ou un changement d'états d'un composant à surveiller (B1 à B6, C1 à C6, D1 à D6) qui appartient à un dispositif avec des composants (B1 à B6, C1 à C6, D1 à D6) adressables reliés dans un réseau de communication,
un composant (D1) pouvant être surveillé par au moins un autre composant (C6) et un composant surveillant (C6) pouvant émettre un ordre de surveillance qui comprend l'adresse de ce composant (C6),
**caractérisé par le fait que**
les composants surveillants ou surveillés (D1, C6) échangent directement des données,
le composant surveillant (C6) transmet l'ordre de surveillance directement au composant à surveiller (D1),
chaque composant surveillé (D1) mémorise l'adresse de chaque composant surveillant (C6), surveille lui-même son propre état et le transmet au moins lors d'un changement d'état au composant surveillant (C6).
